# EUROPEAN PATENT APPLICATION

(11) **EP 2 381 148 A2**
(43) Date of publication of application: **26.10.2011**
(21) Application number: 11162683.4
(22) Date of filing: 15.04.2011
(51) Int. Cl.: F16K 31/40, F16K 31/44

(54) **Valve with emergency drive**

(30) Priority: 21.04.2010 IT RE20100004 U
(71) Applicant: Brevini Fluid Power S.P.A., 42124 Reggio Emilia (IT)
(72) Inventor: Trinchieri, Piergiorgio, 42100, Reggio Emilia (IT)
(74) Representative: Villanova, Massimo

(57) **Abstract**

In a hydraulic valve with a movable core (8), a manual control rod (4) for pulling the movable core in the event of an emergency, comprises a wire made of steel for springs and having a slot-curved end (5) that interacts against a shoulder of the core. The wire is fixed to a ring nut (6) by means of a grubscrew (7).

## Description

### Background of the invention

The present invention relates to a valve with an emergency drive, in particular a valve with manual emergency control. Specifically, the present invention relates to the manufacture of the manual emergency control rod in valves for controlling and/or distributing a flow, such as, for example, in distribution valves, hydraulic valves, etc.

Hydraulic or distribution valves have the task of inserting, interrupting and/or deflecting the oil flow and, ultimately, controlling the movement direction or the stop positions of an application (for example a cylinder or hydraulic motor). The most frequently used drive is the electric drive, which operates by using magnets of different type (direct current, alternating current, dry, oil-bath, etc). Electrically driven hydraulic valves may nevertheless require, for particular applications and/or safety functions, a control system that is manually drivable by a ring nut, or crank, or lever, or other mechanical system that, by means of a control rod, moves the movable core (connected to the shutter or to the box) that, depending on the position, causes the channels of the valve body where the power fluid passes to be connected or sectioned.

### Summary of the invention

The invention relates to a solution that is suitable for providing particularly cheap manufacturing and efficacy in use of the aforesaid manual control rods of the movable core of a valve.

The invention can in particular relate to the use of (calibrated) wires for manufacturing the manual emergency control rod in valves.

Specifically, but not exhaustively, the solution can be based on the use of wires or bars with a calibrated diameter, that can be suitably shaped by plastic deformation at one end, rather than in processing, by a machine tool, of the diameter of the control rod, as occurs in known systems.

The solved technical problem consists of defining a new configuration and of a new method for manufacturing the manual control rods of the movable core, aimed at reducing manufacturing costs.

Another solved technical problem consists of the possibility of using special steels, like high-resistance steels or stainless steels that are difficult to process, the use of which in known control rods was limited by high costs and low productivity, linked to the need for shaping by a machine tool of the external diameter.

The possibility of using steels with greater resistance enables the technical problem of reducing the diameter of the control rod to be reduced, with the consequent possibility of reducing the overall dimensions of the assembly and the drawing problems.

The possibility of using stainless steels with high resistance to corrosion, specifically, but not exclusively, AISI316, SuperAustenitic, and Duplex steels, enables the performance of the control rods to be improved in particularly harsh environments, without the excessive extra costs connected with machining these types of steel with a machine tool.

The technical problems exposed above for steels also apply to other non-ferrous materials that are usable for making the control rods.

Such technical problems and still others have all been solved according to one or more of the claims set out below.

The technical problem can be solved by the use of wires of calibrated steel, with surface finish requisites and with a section of the precision required for couplings with the sliding seat.

By way of non-exhaustive example, an ideal coupling with a seat made of highly workable 11SMnPb36 steel measuring ⌀1.65 +0.05/-0 requires a wire with a tolerance on the diameter ⌀1.65 ±0.015, and maximum roughness of Ra 1.6.

Products matching these requirements are available on the market, inasmuch as they were already used in other applications such as, for example, with no claim to exhaustivity, steel wires with a high carbon content, made of stainless steel, and made of brass, generally used for the construction of springs.

The wire, cut to the desired length, can then be shaped at the end by plastic deformation.

### Brief description of the drawings

The invention can be better understood and implemented with reference to the attached drawings that illustrate some embodiments by way of non-limiting example in the case of a two-way, two-position electrically controlled valve.
Figure 1 is the section of a valve in known systems, with a control rod 1 obtained with a machine tool.
Figure 2 is the section of a valve with a control rod 4 conforming to the present invention.
Figure 3 is a view of various embodiments of the present invention.

### Detailed description

With reference to the aforesaid figures, with 1 the state of the art has been indicated overall, relating to a two-way and two-position directional valve manufactured by Brevini Fluid Power SPA. The control rod 1 enables the movable core 3 to be pulled manually by a ring nut 2.

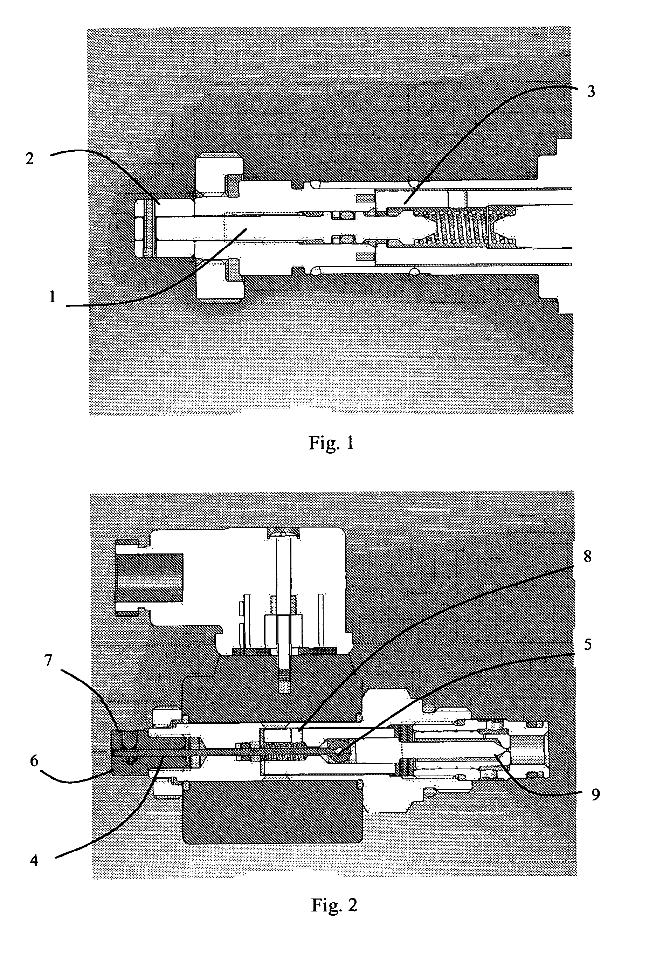

In known systems, like the one in figure 1, the control rod 1 is obtained by machining with a machine tool.

Figure 2 shows an embodiment of the present invention. The emergency manual control rod 4 is obtained from a wire for springs made of AISI302 steel with diameter measuring ⌀1.6 ±0.015, curved at one end 5 and fixed, by a socket head screw or grubscrew 7, to the ring nut 6.

The control rod 4, when it is driven by the ring nut 6, drags the movable core 8, which in the specific case enables the shutter 9 to be opened.

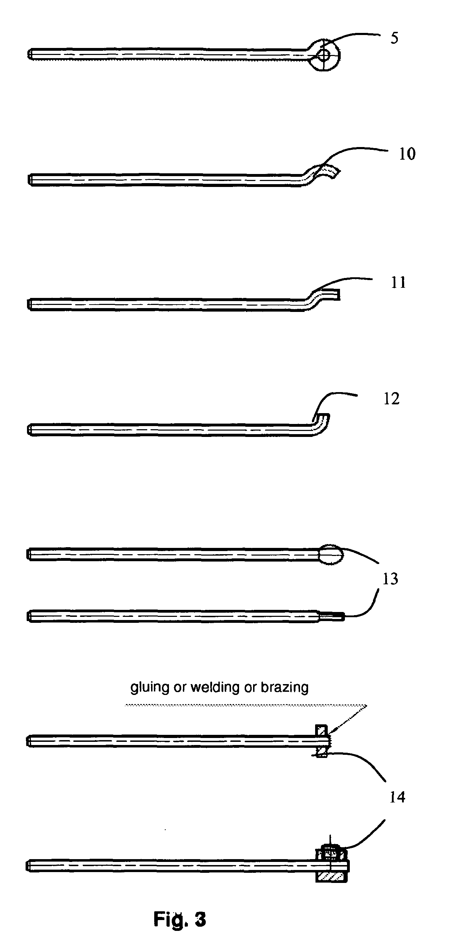

With reference to figure 3, the end 5 of the control rod can be deformed plastically in various configurations 10, 11, 12, 13, for example as a function of the deformability of the material constituting the wires, or for aesthetic requirements, without this entailing substantial modifications to functionality.

The function of dragging the movable core can also be ensured by a protrusion of material 14 fixed mechanically, for example with a socket head screw, or by gluing, or by welding or brazing, to the end 5 of the control rod.

## Claims

1. Valve comprising a movable core (8) and a manual command rod (4) configured for pulling said movable core (8), **characterised in that** said command rod (4) comprises at least one wire.

2. Valve according to claim 1, wherein said wire is made of steel for springs and has an end (5) that interacts in contact with said core (8) to pull said core, said end (5) having a protrusion that protrudes radially from said wire to abut against a shoulder of said core (8) and that comprises a plastically deformed portion of said wire, said plastically deformed portion being curved in the shape of a slot, said command rod (4) comprising a manual gripping body (6) to which said wire is fixed and provides the movement for said wire, said wire being fixed to said body (6) by a mechanical locking member (7).

3. Valve according to claim 1, wherein said wire is made of a material for springs, for example steel for springs, or of a metal and/or polymer material that is available in the form of a thread.

4. Valve according to claim 3, wherein said wire has an end (5) that interacts in contact with said core (8) to pull said core.

5. Valve according to claim 4, wherein said end (5) has a protrusion that protrudes radially from said wire to abut against a shoulder of said core (8).

6. Valve according to claim 5, wherein said protrusion comprises a plastically deformed portion of said wire in said end (5).

7. Valve according to claim 6, wherein said wire is curved in said end (5) to form said deformed portion.

8. Valve according to claim 7, wherein said wire is curved to form a slot.

9. Valve according to claim 7, wherein said wire is curved in such a way that said deformed portion in said end (5) has a concave part or a convex part, that interacts in contact with said core (8) to pull said core.

10. Valve according to claim 6, wherein said wire is deformed plastically by crushing in said end (5) to form said deformed portion.

11. Valve according to claim 5, wherein said protrusion is formed by an additional element (14) joined to said end (5) of the wire by a mechanical fixing member, or by gluing, or by welding, or by brazing.

12. Valve according to any preceding claim, wherein said command rod (4) comprises a manual gripping body (6) to which said wire is fixed and which supplies movement to said wire.

13. Valve according to claim 12, wherein said wire is fixed to said body (6) by a mechanical locking member, for example a grubscrew (7).

14. Valve according to claim 12 ○ 13, wherein said body comprises a ring nut (6) suitable for supplying movement to said wire.

15. Valve according to claim 12 ○ 13, wherein said body is configured for supplying movement to said wire by a lever-type movement.
